Europäisches Patentamt

European Patent Office

Office européen des brevets

(19)

(11) Veröffentlichungsnummer : **0 262 389 B2**

(12) **NEUE EUROPÄISCHE PATENTSCHRIFT**

(45) Veröffentlichungstag der neuen Patentschrift :
**11.05.94 Patentblatt 94/19**

(51) Int. Cl.⁵ : **C10G 45/48,** C10G 67/08,
B01J 23/94

(21) Anmeldenummer : **87112320.4**

(22) Anmeldetag : **25.08.87**

(54) **Verfahren zur Herstellung von medizinischen Weissölen und medizinischen Paraffinen.**

Die Akte enthält technische Angaben, die nach dem Eingang der Anmeldung eingereicht wurden und die nicht in dieser Patentschrift enthalten sind.

(30) Priorität : **30.08.86 DE 3629631**

(43) Veröffentlichungstag der Anmeldung :
**06.04.88 Patentblatt 88/14**

(45) Bekanntmachung des Hinweises auf die Patenterteilung :
**08.11.89 Patentblatt 89/45**

(45) Bekanntmachung des Hinweises auf die Entscheidung über den Einspruch :
**11.05.94 Patentblatt 94/19**

(84) Benannte Vertragsstaaten :
**AT BE DE FR GB IT NL**

(56) Entgegenhaltungen :
**EP-A- 0 092 059
EP-A- 0 096 289
AT-B- 301 728
GB-A- 1 333 826
US-A- 4 055 481
US-A- 4 665 048
US-A- 4 786 402**

(56) Entgegenhaltungen :
**C.N. Satterfield: Meterogenous Catalysis in practice. New York 1980 p.80
B. Delmon et al.: Preparation of catalysts, II. Amsterdam 1979 p. 89-111.
Compendium 75/76, Vortäge der 3. DGMK-Fachgruppentagung, Hannover 1976 S. 338-347
J. of Catalysis, Vol. 45, 1976 p. 51
Applied Catalysis, vol. 43, 1988 P. 239-252**

(73) Patentinhaber : **BASF Aktiengesellschaft
Carl-Bosch-Strasse 38
D-67063 Ludwigshafen (DE)**

(72) Erfinder : **Anstock, Thomas, Dr.
Konrad-Adenauer-Strasse 9
D-6714 Weisenheim (DE)**
Erfinder : **Himmel, Walter, Dr.
Theodor-Storm-Strasse 12
D-6718 Gruenstadt (DE)**
Erfinder : **Schwarzmann, Matthias, Dr.
Carl-Bosch-Strasse 54
D-6703 Limburgerhof (DE)**
Erfinder : **Dreyer, Heinz, Dr.
Parkstrasse 18
D-6700 Ludwigshafen (DE)**
Erfinder : **Lebert, Ulrich, Dr.
In den Rausenaeckern 10
D-6719 Hettenleidelheim (DE)**
Erfinder : **Eisenbeis, Ansgar, Dr.
Birkhahnweg 17
D-4504 Georgsmarienhuette (DE)**

EP 0 262 389 B2

Jouve, 18, rue Saint-Denis, 75001 PARIS

EP 0 262 389 B2

**Beschreibung**

Die Erfindung betrifft ein Verfahren zur Herstellung von medizinischen Weißölen und Paraffinen durch katalytische Hydrierung unter Verwendung nickelhaltiger Katalysatoren. Hierbei wird durch eine Vorbehandlung die Aktivität der Katalysatoren erhöht und die Standzeit verlängert.

Medisinische Weißöle und Paraffine sind stark raffinierte Erdölfraktionen, die frei von Sauerstoff-, Stickstoff- und Schwefelverbindungen sind und praktisch keine Anteile an Aromaten mehr enthalten. Sie werden zur Herstellung von Kosmetika und Arzneimitteln und im Lebensmittelsektor verwendet. Hierfür ist es erforderlich, daß die Produkte geschmacksneutral, geruchslos, farblos und chemisch weitgehend inert sind, d.h. insbesondere keine toxischen Substanzen wie Aromaten enthalten. Die Anforderungen, die für Paraffine und Weißöl gelten, sind durch Spezifikationen definiert, wie z.B. in USA durch die Food and Drug Administration (FDA) oder in der Bundersrepublik Deutschland durch das Deutsche Arzneimittelbuch (DAB) bzw. die Mitteilungen des Bundesgesundheitsamtes (BGA) festgelegt werden.

Weißöle werden aus Erdölfraktionen, die oberhalb etwa 200°C sieden, gewonnen. Bei erhöhten Gehalten an Aromaten und Heteroverbindungen werden die Öle gegebenenfalls einer Lösungsmittelraffination z.B. mit Furfurol oder N-Methyl-pyrrolidon unterworfen, um den Aromatengehalt abzusenken. Zur Erniedrigung des Stockpunktes werden diese Fraktionen in der Regel einer Entparaffinierung unterzogen.

Paraffine fallen zum einen bei der Entparaffinierung von Endöldestillaten, hauptsächlich von Schmierölfraktonen an. Zum anderen werden die Paraffine aber auch aus Rückstandsölen, die vorher in der Regel durch eine Entasphaltierung von Asphalten befreit wurden, abgetrennt. Die Entparaffinierung kann z.B. mit Lösungsmitteln wie Methylethylketon-Toluol-Gemischen oder chlorierten Kohlenwassertoffen oder unter Verwendung von Hamstoff erfolgen.

Für Paraffine gibt es verschiedene Anforderungskriterien. So werden in Deutschland Paraffine aufgrund ihres Erstarrungspunktes bzw. ihrer Viskosität in mikrokristalline und makrokristalline Wachse eingeteilt, die jeweils unterschiedlichen Spezifikationen entsprechen müssen. Bedingt durch unterschiedliche Anforderungen werden technische Rohparaffine verschieden stark entölt, so daß sie Ölanteile zwischen 0.2 und 20 Gew.-% aufweisen.

Ältere Verfahren zur Herstellung von Weißölen und Paraffinen gehen von Erdölfraktioen aus, die durch einmalige Schwefelsäureraffination zu technischen bzw. durch mehrmalige Schwefelsäureraffination und anschließender Behandlung mit Bleicherde zu medizinischen Weißölen bzw. Paraffinen verarbeitet werden. Anstelle von Schwefelsäure kann auch Oleum eingesetzt werden. Diese Verfahren werden neuerdings durch hydrierende Verfahren ersetzt, da diese zum einen zu höheren Ausbeuten führen und zum anderen umweltfreundlicher sind.

Die modemen bekannten Verfahren arbeiten nach einem mehrstufigen katalytischen Hydrierverfahen. In DE-PS 23 66 264 und EP-PS 00 96 289 wird ein zweistufiger Prezaß beschrieben, bei dem Erdölfraktionen im Siedebereich von 200 bis 550°C zu medizinischen Weißölen aufhydriert werden. In der ersten Hydrierstufe werden die ggf. vorher solventraffinierten Einsatzöle in Gegenwart eines schwefelfesten Hydrierkatalysators zu Weißölen technischer Qualität raffiniert. In einer zweiten Stufe werden diese Weißöle an einem Katalysator, der aus einem Metall der Gruppe VIII des Periodensystems auf einem feuerfesten oxidischen Träger besteht, zu medizinischer Qualität aufhydriert. Nach DE-OS 16 45 791 wird in der zweiten Hydrierstufe ein Edelmetallkatalysator benutzt.

Bei der Erzeugung medizinischer Weißöle und Paraffine besteht die Aufgabe in einer Absenkung des Aromatengehaltes auf einen Wert, der den durch die einschlägigen Vorschriften limitierten Höchstwert nicht überschreitet. Der für diese Hydrierung eingesetzte Katalysator muß schon bei niedrigen Temperaturen eine große Hydrieraktivität aufweisen, da erhöhte Temperaturen das thermodynamische Gleichgewicht nach der Seite der Dehydrierung zu Aromaten verschieben. Außerdem treten bei höheren Temperaturen unenwünschte Spaltreaktionen auf, die zu einer Verschlechterung der Produktqualität wie z.B. Absenkung von Viskosität, Flammpunkt und/oder Siedekurve führen.

Die Erfindung geht aus von einem Verfahren zur Herstellung von medizinischen Weißölen und medizinischen Paraffinen aus Aromaten, Stickstoff-, Sauerstoff- und Schwefelverbindungen enthaltenden Erdölfraktionen wie leichten und schweren atomosphärischen Gasölen, Vakuumgasölen und Rückstandsölen, die in einer ersten Behandlungsstufe durch eine Schwefelsäureraffination oder eine katalytische Hydrierung vorbehandelt sind, durch Hydrierung in einer zweiten Stufe bei einem Druck von 5 bis 20 MPa, einer Temperatur von 160 bis 330°C, einer spezifischen Katalysatorbelastung von 0,1 bis 2,0 kg Öl pro Liter Katalysator und Stunde und einem Gas/Öl-Verhältnis von 0,1 bis 1,0 Nm$^3$/kg an einem Nickel enthaltenden Katalysator.

Die Erfindung betrifft ein Verfahren dieser Art, bei dem man den zunächst in der oxidischen Form vorliegenden Nickelkatalysator der zweiten Stufe zuerst bei 350 bis 530°C mit Wasserstoff oder Wasserstoff enthaltenden Gasen reduziert, anschließend passiviert, wobei Temperaturen von 450°C nicht überstiegen werden

2

dürfen und oberhalb 150°C mit Wasserstoff erneut aktiviert, bevor die Hydrierung zu medizinischen Weißölen bzw. Paraffinen erfolgt.

Bei den Katalysatoren für die zweite Hydrierstufe liegen die hydrieraktiven Metalle nach der Herstellung des Katalysators in der Regel in ihrer oxidischen Form vor. Vor der Inbetriebnahme muß der Katalysator einer Aktivierungsbehandlung mit Wasserstoff unterzogen werden, um seine volle Hydrieraktivität zu erhalten. Die Passivierung kann mit Kohlendioxid, mit Sauerstoff oder mit Wasserdampf erfolgen. Hierbei wird das Nickel zumindest teilweise wieder in seine oxidische Form überführt. Erst durch die anschließende Aktivierung erhält der Kataysator seine optimale Aktivität.

Die Reduktion wird oberhalb 350°C und unterhalb 530°C, bevorzugt in einem Temperaturbereich von 400 bis 470°C, mit Wasserstoff durchgeführt. Die erfindungsgemäße Passivierung muß so durchgeführt werden, daß die Temperaturen nicht über 450°C ansteigen und bevorzugt in einem Bereich von 20 bis 250°C liegen. Die bei der Passivierung mit Kohlendioxid auftretende Wärmetönung wird durch die Regelung der Kohlendioxidmenge innerhalb dieser Temperaturgrenzen gehalten. Erfolgt die Passivierung mit Kohlendioxid, kann bei anschließendem Luftzutritt an den Katalysator eine Erwärmung auftreten. Um dies zu vermeiden, kann der Katalysator in einer Schutzgasatmosphäre transportiert und in den Reaktor eingefüllt werden. Bevorzugt behandelt man deshalb den Katalysator nach der Passivierung mit Kohlendioxid mit einem Stickstoff/Luft-Gemisch, um die dabei eventuell auftretende Wärmetönung kontrollieren zu können. Diese Nachbehandlung mit einem Stickstoff/Luftgemisch nach der Passivierung mit Kohlendioxid führt zu einer merklich geringeren Wärmeentwicklung als bei der Passivierung durch Sauerstoff.

Die Passivierung durch Sauerstoff erfolgt vorzugsweise durch Sauerstoff enthaltende Gase und insbesondere mit Stickstoff/Luft-Gemischen. Dabei kann Luft zu einem Stickstoffstrom so zudosiert wenden, daß der durch die Oxidierung bedingte Temperaturanstieg kontrollierbar ist und im bevorzugten Temperaturebereich begrenzt werden kann. Diese Temperaturkontrolle kann erfolgen, indem man z.B. am Anfang einem Stickstoffstrom etwa 2 Vol.% Luft zudosiert. Erfolgt dann bei diesen Konzentrationen keine Reaktion mehr, was am Ausbleiben einer Wärmetönung erkennbar ist, so kann die Luftkonzentration stufenweise bis zur Verwendung reiner Luft erhöht werden. Durch diese Maßnahmen wird eine thermische Schädigung des Katalysators verhindert.

Bei der Passivierung mit Wasserdampf erfolgt ebenfalls eine Reaktion an der Katalysatoroberfläche unter Bildung einer Nickeloxidschutzschicht, die die vollständige Umsetzung des metallischen Nickels zu Nickeloxid verhindert. Die Einhaltung der Temperaturgrenzen bei der Passivierung wird hier ebenfalls durch die Wassordampfmenge geregelt.

Die so passivierten Katalysatoren liegen anschließend in einer nur teilweise oxidierten Form vor und sind an Luft stabil und handhabbar. Vor Inbetriebnahme dieser Katalysatoren müssen sie nochmals mit Wasserstoff oder wasserstoffhaltigen Gasen aktiviert werden. Die Aktivierung der passivierten Katalysatoren kann sowohl bei der Herstellung als auch in situ erfolgen. Im ersten Fall ist es notwendig, den Katalysator unter Schutzgas zu transportieren und in die Anlage einzufüllen. Um die damit verbundenen Schwierigkeiten zu vermeiden, wird in der Regel die Aktivierung in der Anlage durchgeführt. Dadurch, daß der Katalysator nach der erfindungsgemäßen Passivierung nur teilweise in einer oxidischen Form vorliegt, verringert sich die Aktivierungszeit in der Anlage, und der Produktionsausfall bei Inbetriebnahme eines neuen Katalysators wird verringert.

Die Temperatur, die für die Aktivierung der passivierten Katalysatoren erforderlich ist, hängt wesentlich von der Art der Passivierung ab. Im Falle der Sauerstoff- bzw. Wasserdampfpassivierung sind Temperaturen für die Aktivierung oberhalb 350°C erforderlich, um eine ausreichende Hydrieraktivität zu erreichen. Dies ist mit einem höheren Energieverbrauch und einem zusätzlichen Zeitbedarf für die Aufheizphase und das Abkühlen auf die Anfangsbetriebstemperatur verbunden. Nach einer Passivierung mit Kohlendioxid dagegen kann die Aktivierung, unabhängig davon, ob der Katalysator anschließend mit luft behandeft wurde oder nicht, bereits bei Temperaturen oberhalb 150°C erfolgen. Dadurch wird zum einen Energie für das Aufheizen und zum anderen die Zeit für die Aufheiz- und Abkühlphase, die mehrere Stunden bis einige Tage betragen kann, eingespart.

Der Vorteil dieser Erfindung kann bei Katalysatoren ausgenutzt werden, die im wesentlichen aus Nickeloxid auf einem feuerfesten Träger bestehen, wobei der Träger aus einer oxidischen Verbindung der Elemente Si, Mg, Cr oder Gernischen davon besteht und gegebenenfalls Promotoren wie Verbindungen der Elemente Mo oder P enthält. Geeignet sind z.B. Katalysatoren wie sie in EP 0096289 beschrieben sind. Durch das erfindungsgemäße Verfahren erhält man bei langen Standzeiten der Katalysatoren spezifikationsgerechte medizinische Weißöle mit erforderlich niedrigem Aromatengehalt. Die Bestimmung des Aromatengehaltes erfolgt durch Messung der Absorption im UV-Licht bei bestimmten Wellenlängen oder -bereichen. Dabei wird je nach Vorschrift eine unverdünnte, verdünnte oder mit z.B. DMSO extrahierte Probe verwendet.

Beispiele

Für die folgenden Beispiele wurde ein Katalysator verwendet, dessen Herstellung in EP 00 96 289 beschrieben ist.

Der in den Beispielen benutzte Katalysator wird aus einer Wasserglas, Salpetersäure und Nickelnitrat enthaltenden Lösung durch Fällen mit einer Sodalösung bei einem pH-Wert von 8, Abfiltrieren, Waschen mit Wasser und Sprühtrocknen, Vermischen des Produktes mit 5 % Cellulose, Kneten unter Zusatz eines Peptisierungsmittels, Verformen, Trocknen und anschließender Calcinierung bei Temperaturen von 380 bis 550°C erhalten. Der fertige Katalysator weist eine spezifische Oberfläche nach BET von 332 $m^2/g$ auf und hat ein Schüttgewicht von 810 g/l. Der Nickelgehalt beträgt 49 % bei dem in der oxidischen Form vorliegenden Katalysator.

Beispiel 1

Der obenbeschriebene Katalysator in seiner oxidischen Form wird bei 440°C mit Wasserstoff reduziert. Nach dem Abkühlen auf Raumtemperatur wird der Katalysator mit Kohlendioxid Passiviert. Die Kohlendioxidmenge wird so reguliert, daß die Temperatur des Katalysators dabei nicht über 20°C ansteigt. Anschließend wird Luft über den Katalysator geleitet, wobei ein maximaler Temperaturanstieg von 80°C zugelassen werden darf. Die Aktivierung des Katalysators erfolgt dann bei 200°C mit Wasserstoff.

Beispiel 2

Der obenbeschriebene Katalysator in seiner oxidischen Form wird bei 440°C mit Wasserstoff reduziert. Nach dem Abkühlen auf Raumtemperatur wird der Katalysator mit einem Luft/Stickstoff-Gemisch passiviert, wobei der Luftanteil anfangs 1% beträgt, damit die Temperaturerhöhung auf 80°C begrenzt werden kann. Die Aktivierung des Katalysators erfolgt anschließend bei 440°C mit Wasserstoff.

Beispiel 3

Die oxidische Form des obenbeschriebenen Katalysators wurde bei 440°C mit Wasserstoff reduziert.

Die in den Beispielen 1 - 3 beschriebenen Katalysatoren werden einem Aktivitätsvergleich unterzogen. Hierzu wird das in der Tabelle 1 beschriebene technische Weißöl unter jeweils gleichen Reaktionsbedingungen hydriert

| Tabelle 1 | |
| --- | --- |
| Eigenschaften des technischen Weißöls | |
| Dichte bei 15°C | 0,865 $g/cm^3$ |
| Viskosität bei 20°C | 222,5 $mm^2/s$ |
| bei 100°C | 9,2 $mm^2/s$ |
| Schwefel | 9 Gew. ppm |
| Flammpunkt | 248°C |
| Siedebereich S2 | 389°C |
| 5% | 438°C |
| 10% | 452°C |
| 30% | 477°C |
| 50% | 490°C |
| 70% | 503°C |
| 90% | 522°C |
| 95% | 532°C |
| SE | 543°C/98% |
| Lichtabsorption DAB 8 | |
| 275 nm | 150 |
| 295 nm | 270 |
| 300 nm | 235 |

Beispiel 4

Die Reaktionsbedingungen für den Aktivitätsvergleich für die drei Ausführungsformen des Katalysators

4

sind in der Tabelle 2 zusammengefaßt.

Tabelle 2

| Versuchsbedingungen: | |
| --- | --- |
| Druck MPa | 20 |
| Reaktionstemperatur (°C) | 170 |
| Durchsatz (kg/1x h) | 0,2 |
| Gas/Öl (Nm³/kg) | 0,4 |

Als Kriterium für die Hydrieraktivität dient der Restaromatengehalt in den Reaktionsprodukten. Dieser wurde nach DAB 8 bestimmt. Die so erhaltenen Lichtabsorptionswerte sind in der folgenden Tabelle gegenübergestellt:

Tabelle 3

| Ergebnisse Lichtabsorption DAB 8 | Grenz-wert | Beispiel 1 | Beispiel 2 | Beispiel 3 |
| --- | --- | --- | --- | --- |
| 275 nm | 0,80 | 0,69 | 0,70 | 0,94 |
| 295 nm | 0,40 | 0,11 | 0,10 | 0,23 |
| 300 nm | 0,30 | 0,07 | 0,07 | 0,15 |

Weitere physikalische Daten, wie Viskosität, Flammpunkt und der 2 %-Punkt der Siedekurve ändern sich durch die Hydrierung nicht, d.h. es entstehen praktisch keine Spaltprodukte.

Wie aus den Ergebnissen hervorgeht, ist bei den gewählten, für alle Versuche gleichen Bedingungen nur mit den vorreduzierten Katalysatoren (Beispiel 1 und 2) ein spezifikationsgerechtes medizinisches Weißöl zu erhalten.

Um mit dem Katalysator des Beispiels 3 die gleichen Lichtabsorptionswerte wie beim Beispiel 1 und 2 zu erreichen, wäre eine um 23°C höhere Reaktionstemperatur erforderlich.

Weiterhin zeigen die Ergebnisse, daß der mit Kohlendioxid passivierte Katalysator bereits nach einer Aktivierungstemperatur von nur 200°C (Beispiel 1) praktisch dieselben Resultate erzielt wie der durch Sauerstoff passivierte nach einer Aktivierungstemperatur von 440°C (Beispiel 2).

**Patentansprüche**

1. Verfahren zur Herstellung von medizinischen Weißölen und medizinischen Paraffinen aus Aromaten, Stickstoff-, Sauerstoff- und Schwefelverbindungen enthaltenden Erdölfraktionen, wie leichten und schweren atmosphärischen Gasölen, Vakuumgasölen und Rückstandsölen, die in einer ersten Behandlungsstufe durch eine Schwefelsäureraffination oder eine katalytische Hydrierung vorbehandelt sind, durch Hydrierung in einer zweiten Stufe bei einem Druck von 5 bis 20 MPa (50 bis 200 bar), einer Temperatur von 160 bis 330°C, einer spezifischen Katalysatorbelastung von 0,1 bis 2,0 kg Öl pro Liter Katalysator und Stunde und einem Gas/Öl-Verhältnis von 0,1 bis 1,0 Nm³/kg an einem Nickel auf einem feuerfesten Träger aus einer oxidischen Verbindung der Elemente Si, Mg, Cr oder Gemischen davon enthaltenden Katalysator, dadurch gekennzeichnet, daß man den zunächst in der oxidischen Form vorliegenden Nickelkatalysator der zweiten Stufe zuerst bei 350 bis 530°C mit Wasserstoff oder Wasserstoff enthaltenden Gasen, reduziert, anschließend passiviert, wobei Temperaturen von 450°C nicht überstiegen werden dürfen und oberhalb 150°C mit Wasserstoff erneut aktiviert, bevor die Hydrierung zu medizinischen Weißölen bzw. Paraffinen erfolgt.

2. Verfahren nach Anspruch 1, dadurch gekennzeichnet, daß die Passivierung mit Kohlendioxid erfolgt.

3. Verfahren nach Anspruch 1, dadurch gekennzeichnet, daß die Passivierung durch Sauerstoff erfolgt.

4. Verfahren nach Anspruch 1, dadurch gekennzeichnet, daß die Passivierung mit Wasserdampf erfolgt.

## Claims

1. A process for the preparation of a medicinal white oil or medicinal paraffin from a petroleum fraction containing aromatics and nitrogen, oxygen and sulfur compounds, eg. a light or heavy atmospheric gas oil, vacuum gas oil or residue, which has been pretreated in a first stage by acid treatment or catalytic hydrogenation, by hydrogenation in a second stage over a catalyst containing nickel on a refractory carrier comprising an oxidic compound of the elements Si, Mg, Cr or mixtures thereof at from 5 to 20 MPa (from 50 to 200 bar) and at from 160 to 330°C, a space velocity of from 0.1 to 2.0 kg of oil per liter of catalyst per hour and a gas/oil ratio of from 0.1 to 1.0 m$^3$ (S.T.P.)/kg, wherein the nickel catalyst used in the second stage and initially present in the oxide form is first reduced at from 350 to 530°C with hydrogen or a hydrogen-containing gas, then passivated, without exceeding 450°C, and again activated at above 150°C with hydrogen, before the hydrogenation to a medicinal white oil or paraffin is carried out.

2. A process as claimed in claim 1, wherein the passivation is carried out using carbon dioxide.

3. A process as claimed in claim 1, wherein the passivation is carried out using oxygen.

4. A process as claimed in claim 1, wherein the passivation is carried out using steam.

## Revendications

1. Procédé de fabrication d'huiles blanches médicinales et de paraffines médicinales à partir de fractions de pétrole contenant des composés de la série aromatique, des composés azotés, des composés oxygénés et des composés soufrés, tels que des gazoles légers et lourds obtenus par distillation à la pression atmosphérique, des gazoles obtenus par distillation sous vide et des résidus de raffinage, qui, dans une première étape de traitement, ont été pré-traités par un raffinage à l'acide sulfurique ou une hydrogénation catalytique, par hydrogénation dans une seconde étape en présence d'un catalyseur contenant du nickel sur un support réfractaire fait d'un composé oxydé des éléments Si, Mg, Cr ou de leurs mélanges, sous une pression de 5 à 20 MPa (50 à 200 bars), à une température de 160 à 330°C, avec une charge spécifique du catalyseur de 0,1 à 2,0 kg de l'huile traitée par litre de catalyseur et par heure et un rapport gaz/huile de 0,1 à 1,0 m$^3$N/kg, caractérisé en ce que, tout d'abord, on réduit avec de l'hydrogène ou des gaz contenant de l'hydrogène et à une température de 350 à 530°C le catalyseur au nickel employé dans la seconde étape et qui se trouve initialement sous une forme oxydée, puis en ce qu'on passive le catalyseur, opération au cours de laquelle des températures de 450°C ne doivent pas être dépassées, et en ce qu'on active à nouveau le catalyseur avec de l'hydrogène à une température supérieure à 150°C, avant de procéder à l'hydrogénation conduisant aux huiles blanches ou aux paraffines médicinales.

2. Procédé suivant la revendication 1, caractérisé en ce que l'on effectue la passivation avec du dioxyde de carbone.

3. Procédé suivant la revendication 1, caractérisé en ce que l'on effectue la passivation avec de l'oxygène.

4. Procédé suivant la revendication 1, caractérisé en ce que l'on effectue la passivation avec de la vapeur d'eau.